# EUROPEAN PATENT APPLICATION

(11) **EP 4 686 032 A1**
(43) Date of publication of application: **28.01.2026**
(21) Application number: 24190180.0
(22) Date of filing: 23.07.2024
(51) Int. Cl.: H02J 3/00, H02J 3/14, H02J 4/00, C25B 1/04, H02J 3/28, H02J 15/00

(54) **ELECTROLYSIS PLANT AND METHOD FOR OPERATING AN ELECTROLYSIS PLANT**

(71) Applicant: Siemens Energy Global GmbH & Co. KG, 81739 München (DE)
(72) Inventor: Bendig, Marvin, 90513 Zirndorf (DE); Dros, Arne, 91052 Erlangen (DE); Schumann, Sven, 91452 Wilhermsdorf (DE)

(57) **Abstract**

Electrolysis plant and method for operating an electrolysis plant

The invention is related to an electrolysis plant (1) comprising an electrolyser (3) with a plurality of electrolysis cells (19) arranged in series connection and a rectifier (5), the rectifier (5) comprising a DC-voltage output (7) that is connected to the electrolyser (3) via a DC supply line (13) and an AC-voltage input (9) that is designed for a connection to a grid (11) and for receiving power from said grid (11) to supply the electrolyser (3) with electrolysis current. A short circuit arrangement (15) is branching off the DC supply line (13) in parallel to the electrolysis cells (19), wherein the short-circuit arrangement (15) comprises a plurality of controllable short-circuit switches (17a, 17b, 17c, 17d) that are activatable respectively to short-circuit a selected number of the electrolysis cells (19) in order to lower the voltage demand while maintaining electrolysis current and keeping the non-short-circuited electrolysis cells (19) in operation. The electrolysis plant 1 is enabled to perform a Low-Voltage-Ride-Through (LVRT) operational mode.

The invention is further related to a method for operating an electrolysis plant (1), particularly in a Low-Voltage-Ride-Through (LVRT) operational mode, wherein the electrolysis plant (1) during operation is connected to the grid (11).

## Description

The invention is related to an electrolysis plant comprising an electrolyser and a rectifier. The invention also relates to a method for operating an electrolysis plant connected to a grid, in particular a public grid or an island network.

An electrolysis plant is an electrochemical device that uses electricity, mainly DC current, to convert substances or chemicals provided as an educt via electrolysis processes into products. Corresponding to the variety of different electrochemical electrolysis processes there is also a large variety of electrolysis systems, such as an electrolysis plant water electrolysis and production of Hydrogen.

Hydrogen is nowadays generated from water, for example, by means of a proton exchange membrane (PEM) electrolysis or an alkaline electrolysis. The electrolysis systems use electrical energy to produce hydrogen and oxygen from the water supplied as educt. This electrochemical conversion process takes place in an electrolysis stack composed of several electrolysis cells. Several electrolysis cells are connected in series to form an electrolysis module, or module for short. Several modules in turn are connected in series to form an electrolysis stack. Water is introduced as a reactant into the electrolysis stack, which is under direct current (DC voltage), and after the water has flowed through the electrolysis cells, two fluid streams emerge as electrolysis products, consisting of water (H₂O) and gas bubbles (O₂ and H₂) in a two-phase mixture.

Current considerations are to generate valuable materials with excess energy from renewable energy sources in times of plenty of sun and wind, i.e. with above-average solar power or wind power generation. A resource can be hydrogen notably, which is generated by water electrolysis systems. For example, so-called renewable energy gas - also known as "RE gas" - can be produced bases of hydrogen. A renewable gas is a combustible gas that is obtained from renewable sources using electrical energy.

Hydrogen is a particularly environmentally friendly and sustainable energy source. It has the unique potential of realizing energy systems, transportation systems and large parts of chemical industry without CO₂ emissions. For this to succeed, however, the hydrogen must not come from fossil sources, but must be produced with the help of renewable energies. At least a growing proportion of the electricity generated from renewable sources is now being fed into the public grid. Thus, according to the electricity mix, at least a corresponding and increasing proportion of green hydrogen can be generated if an electrolysis system is operated with electricity from the public grid or an island grid containing renewable power generation units.

In the case of electrolysis carried out on an industrial scale, the direct current is mainly provided via line-commutated rectifiers, but also self-commutated rectifiers can be used.

EP 3 556 905 A1 discloses such a circuit arrangement for the direct current supply of a plurality of electrolysers arranged in parallel. The circuit arrangement includes a rectifier, which converts an AC voltage on the input side into a first DC voltage on the output side. Each electrolyser is connected in parallel to the output of the rectifier via a converter, in particular a step-down converter, that converts the first direct voltage into a second direct voltage, such that the second direct voltage drops across the electrolyser. Each of the rectifiers, in particular the step-down converter, can be controlled or regulated thereby to adapt the level of its second direct voltage, its output voltage. By using the step-down converters designed to be controllable and/or adjustable for each of the electrolysers, the current flow through each electrolyser can also be adjusted as required when the electrolysers are connected in parallel.

In recent years, the energy generation market has changed significantly. The path inevitably leads away from large power plants to decentralized generators from renewable energy sources - spread across the whole country. In order to be able to operate a stable power grid despite this change, guidelines and standards are enacted and constantly adapted to the current situation.

Particular attention is paid to the so-called dynamic grid support. This property describes the behavior of the generating unit in the event of a grid failure. If it occurs in the public power grid (e.g. through a short-circuit in an overhead line) and causes a short-term voltage-drop or (e.g. due to a lightning strike in a substation) a short-term voltage increase, it must be ensured that that the public power grid remains stable and that there is no large-scale failure. For this to be obtained, basically, three things must be ensured: On the one hand, the generating unit in the event of an error may not switch off and not disconnect, as this behavior would put additional strain on the network and could possibly lead to a chain reaction. On the other hand, the system must support the grid during the fault by feeding in capacitive or inductive reactive current, depending on the fault. The feeding of reactive current lowers or raises the mains voltage and thus counteracts the error voltage. As a third requirement the system must return to normal operation within a defined period after the error has ended.

Due to their enormous rotating centrifugal masses, large power plants have a certain self-regulating effect in the event of a fault and have so far ensured that grid faults only rarely lead to blackouts. Until a few years ago, it was therefore still permissible for decentralized generation units such as wind energy or photovoltaic systems to disconnect directly from the grid in the event of a fault and stop feeding.

However, the ever-increasing share of renewable energies has forced a rethink. In 2019, renewable energy accounted for around 42% of total electricity generation in Germany. In addition, there are generators from the field of internal combustion engines such as combined heat and power plants or gas turbines. This fundamental change and the fact that a large part of the energy generation from renewable energy is implemented on the grid side with converters means that decentralized generation units and systems are also required to make their contribution to dynamic grid support, to ensure a stable electricity network. Similar Fault Ride Through (FTR) requirements are also applicable for large consumers that are connected to the grid.

Hence, in case of system perturbations of the electric power network, such as, for instance, a voltage dip, a brownout, an overvoltage condition, or the like, supporting capabilities for stabilizing the electric power network by photovoltaic farms, wind farms and/or the like may not be sufficient to ensure a stable operation of the electric power network alone. In this regard, it is considered to provide new requirements and regulation for electrolyzing plants which may make compulsory not only reactive power limit requirements but also injections of reactive current into the electric power network as well.

Moreover, large flexible loads connected to the electric power network, or grid, respectively, in particular electrolysis plants, may cause a substantial effect on the security and/or stability of the operation of the power supply network, especially, in case that the operation of the electrolyzing plant be not flexible with requirements regarding the operation of the power supply network. For example, during power supply network faults caused by different reasons, the alternating voltage may differ from a rated value, however, the electrolyzing plant shall stay connected and permanent disconnection shall be avoided.

For this reason, flexible load plants such as large-scale electrolysis plants need to stay connected during a voltage fault and continue their operation after the fault is cleared. For this purpose, the electrolysis plant plants need to be able to ride through faults and, may, for instance, contribute with specific services that can enhance the grid stability.

This shows that providing electric power network services such as FRT during fault could allow enabling more installation of large-scale electrolyzing plants resulting in more installed capacities and harmonization with the grid operation. So far, the installed capacities of electrolyzing plants are modest and not exceeding several MW in size, but with the present desire with regard to decarbonization policies in different sectors, large-scale electrolyzing plants are more and more expected to be added to the power supply network in the future. This means that the entire functionality of the Fault Ride Through (FRT) needs to be addressed by the electrolyzing plants as such. In this regard, electric power network operators already have drafted some FRT requirements on the connection with the power supply network.

The FRT requirement may be addressed by an electric converter such as a conventional thyristor-based system providing a common blocking operation mode of the thyristors and the resuming the power supply operation again, once the fault is cleared. The same strategy may be applied by an electric converter based on an IGBT- or SiC-based technology allowing the power supply riding through the fault. Nevertheless, fulfilling these FRT requirements is a big challenge for the electrolysis plant and the converter system.

It is an object of the present invention to provide an electrolysis plant with Fault Ride Through Capability.

This object is solved by an electrolysis plant comprising an electrolyser with a plurality of electrolysis cells arranged in series connection and a rectifier, the rectifier comprising a DC-voltage output that is connected to the electrolyser via a DC supply line and an AC-voltage input that is designed for a connection to a grid and for receiving power from said grid to supply the electrolyser with electrolysis current, wherein a short circuit arrangement is branching off the DC supply line in parallel to the electrolysis cells, wherein the short-circuit arrangement comprises a plurality of controllable short-circuit switches that are activatable respectively to short-circuit a selected number of the electrolysis cells in order to lower the voltage demand while maintaining electrolysis current and keeping the non-short-circuited electrolysis cells in operation.

The grid may be the public electricity grid or an island or isolated electricity network. Hence, according to the invention, the electrolysis plant may be connected to the public grid or an island network in a similar manner. The selected number of short-circuited cells may be predefined and programmed in a control scheme of the electrolysis plant.

The invention is based already on the consideration that for high-performance electrolysis plants to be connected as consumer particularly to the public grid in future integrated energy systems, hardly any reliable approaches are known to implement a fault ride through capability in an electrolysis system, and, particularly to design and implement additional network support capability in case needed, like fulfilment of reactive power requirements, like cos(φ)≥ 0,95.

Connecting a large electrolysis plant to the public grid requires compliance with/the fulfilment of the local grid code requirements. Part of these requirements - especially for large plants - is a Fault Ride Through capability (FTR capability). The typical core requirement is to remain fully connected to the grid in case of a temporary voltage dip at the point of connection (Low Voltage Ride Through, LVRT). The grid operator specifies a mandatory curve where the voltage dip is time dependently shown, during which the plant must remain connected. Only longer or deeper voltage dips allow a disconnection of the plant. In addition, grid operators may demand to withstand a limited or unlimited number of such consecutive faults or limit the number by the pre-defined threshold for the integrated power loss during all of these faults. Fulfilling these requirements is a huge challenge for the electrolysis plant operation and its converter system.

According to the electrolysis plant of the invention the electrolysis plant is equipped with a short circuit arrangement that is branching off the DC supply line in parallel to the electrolysis cells. The short-circuit arrangement is a controllable circuitry that is equipped with plurality of controllable short-circuit switches that are each activatable respectively to short-circuit a selected or predetermined number of the plurality of electrolysis cells. With this arrangement a Fault-Ride-Through capability in a temporary undervoltage scenario of the grid is advantageously provided for the electrolysis plant. Hence, in operational mode the voltage demand of the electrolysis plant can be reduced in correspondence or proportional to the voltage drop, while electrolysis DC-current is still provided by the rectifier and is continued in an adapted way to keep the non-short-circuited electrolysis cells in operation. The electrolysis plant is capable to full< stay connected and to produce products from electrolysis process, like Hydrogen in a water electrolysis process while riding through the temporary voltage drop. A "FTR-readyness" is being implemented in the electrolysis plant.

Beyond the FRT capability and grid connection requirement the short-circuit arrangement can be advantageously utilized to provide a continuous DC current and hence a continuation of the sensitive electrochemical process for the non-short-circuited electrolysis cells. Usually, the electrochemical process of electrolysis plants does not feature Fault Ride Through capability, especially ramping-up after fault-clearance is challenging and may increase ageing of the system or impact safe operation.

Hence, with the present invention the major technical challenge of the continuation of the electrochemical process downstream the electrolysis in the event of a power outage as a result of a voltage dip in the grid can be solved. A continuous and safe operation of the electrolysis plant can be obtained. Should this event occur, the electrolysis process can still resume operation with a reduced load. Since the polarization curve (U-I-characteristic) of the electrolyser is rather flat, it would - in the known electrolysis plant configurations - otherwise react sensitive to even small voltage changes. The electrolysis threshold voltage of the cells and stacks is often in the range of 65 - 85% of the nominal voltage (Nernst voltage). After the fault is cleared, some grid operators demand full or almost full pre-fault power consumption within 1-10 seconds when the voltage has recovered to ~85-90% of nominal voltage, which is a big challenge.

Here, in the electrolysis plant comprising a plurality of electrolysis cells arranged in series connection, the electrolysis polarization curve is defined as the sum of the individual polarization curves of all cells connected in series in an electrolysis plant. As described above, the curve is rather flat and a small dip in supply voltage might lead to a complete stop of power consumption. To avoid this, the polarization curve of an electrolysis system can be varied in operation by short-circuiting only a part of the cells and hence lowering the voltage demand accordingly for a certain operational DC-current.

Since the electrolysis characteristic is highly dependent on the input voltage, already a slight voltage reduction changes the input power strongly. If the voltage drops below accumulated the Nernst voltage, about 1.23 V per cell for water electrolysis, the gas production and thus electrolysis process would stop completely. As a typical example only, nominal voltage at the begin of life of an electrolyser is at about 980 V, while the threshold for hydrogen production is in the range of 720 V. Should the input voltage drop quickly to 0.73 p.u., no power can be consumed anymore by the electrolysis plant. This leads to massive imbalance between generation and consumption, when several GW of electrolysis capacity would be simultaneously affected in a large grid, while the generation units continue to operate with just slightly reduced power compared to the pre-fault values. In a worst-case scenario the grid operator would not be able to stabilize the grid, resulting in brown- or blackouts of large regions. As a typical example, for instance, if the voltage drops by 100 V according to the invention roughly only 10% of the electrolysis cells would have to be short-circuited to be able to take up roughly the same amount of DC-current compared to the pre-fault operational mode. In this example, the consumed load of the electrolysis plant would therefore be reduced only by 10% instead of 75%, for typical electrolysis plant.

Since the Nernst-voltage is in the same range, many state of the art electrolysis plants will not be able to reach pre-fault nominal power until the voltage has fully recovered or is balanced again. This might be achieved to some extend by an On-Load-Tap-Changer (OLTC) on any of the upstream transformers, but operating this mechanical switch typically takes 3-5 seconds, which is far too long reaction time to safely bridge a voltage dip and ramp-up fast enough in case the voltage recovery is not sufficient. During this time the electrolysis process might be able to only operate at low part load or not at all. Since some electrolysis plants only start the electrolysis process at 85% voltage, they would see an interruption of power inflow of several seconds, which can entirely stop the process. Especially repetitive faults pose a challenge to the systems, as a numerous turning on and off of the electrochemical process might lead to severe instabilities in the system and finally to a plant trip. In addition, such operation might also impact the ageing of the system negatively.

All these additional hurdles in operational behaviour can be avoided by the electrolysis plant of the present invention. With the present invention a particular important requirement for the grid operator can be addressed, that is a continuous consumption of the load is available after the fault is cleared. Should a large plant - or even worse, multiple large plants - trip in case of short time disturbances within the grid, the grid operator would struggle to balance the power in- and output after fault clearance. The power plants producing the power cannot be adjusted quick enough. Therefore, only a certain power is allowed to trip (to be disconnected) and it is essential for large consumers to remain connected in case of a short-time voltage drop.

The FRT concept implemented in the electrolysis plant of the invention advantageously allows the availability of the electrolysis load after the fault is cleared while the chemical processes can be smoothly continued across the voltage dip without major issues. Both are a very important requirements for the grid operator and the electrolysis plant operator as well.

In an advantageous embodiment the electrolysis plant comprises a control unit, wherein the control unit is designed to operate each of the short circuit switches in the short circuit arrangement.

Each of the short-circuit switches can be activated or deactivated individually by a respective control signal that is provided from the control unit. The control unit is enabled to receive and process real-time data about the grid conditions, in particularly a measure or proportion of the active grid voltage. Depending on the voltage conditions the control unit provides as output a control signal to the short-circuit arrangement to selectively activate or deactivate the short-circuit switches individually. This offers a high operational flexibility and adapted approach of the electrolysis plant to operate a FRT event. For example, in normal operational conditions in case the grid voltage is on the nominal value for the grid, in the short circuit arrangement all short-circuit switches are deactivated, such that high DC electrolysis current is provided through all electrolysis cells in series connection. In a FRT event, depending on the voltage drop, a predefined number of short-circuit switches is activated to short-circuit respective number of selected electrolysis cells to reduce power consumption of the electrolysis plant accordingly.

In a particular advantageous embodiment, the electrolysis plant comprises an interface to a grid stabilization equipment that is connected to the control unit and that is enabled for surveillance of the grid voltage at the point of connection to the grid.

With the help of the grid stabilization equipment the control unit can receive and process an "in-situ" input signal about the present grid conditions on the AC-side of the electrolysis plant. This enables the control unit to provide as output a control signal to the short-circuit arrangement to control the status respective short-circuit switches and to change the status in case of a voltage drop. The control unit is of a particular relevance to operate the short-circuit arrangement and the respective switches in a controlled manner in view of the up-to-date conditions and surveillance of the grid voltage and to activate or deactivate short-circuit switches according to the voltage conditions. The interface to grid stabilizing equipment that determines grid voltage at point of connection, enables in combination with the short-circuit arrangement on the DC-side the full exploitation and adequate use of the electrical energy available in the grid in a Low-Voltage-Ride-Through (LVRT) operational mode. The electrolysis plant operation and the electrochemical processes can be continued seamlessly across LVRT-scenario and the electrolysis plant stays connected and products from electrolysis can be produced, like for example hydrogen production from a PEM-electrolyser.

In a further preferred embodiment of the electrolysis plant the control unit is arranged for operation of respective short circuit switches such that in case of a voltage drop of the grid voltage a selected number of electrolysis cells can be short-circuited, while power consumption proportional to the available grid voltage is continued and an electrolysis current maintained to operate the non-short-circuited electrolysis cells.

The selected number of short-circuited electrolysis cells can be predetermined in a switching scheme for the short-switching arrangement that is incorporated, deposited or programmed in the memory of the control unit. The proportionality of active electrolysis cells in view of the available grid voltage need not to be strictly linear in the Fault-Ride-Through operational mode. It can rather exhibit a discrete or stepwise adaption proportional to the grid voltage. This is because the overall number of electrolysis cells or modules of an electrolysis plant or of an electrolyser is an integer of several hundred cells for example that connected in series.

Therefore, in another advantageous embodiment of the electrolysis plant the control unit is provided such that the selected number of short-circuited electrolysis cells can be applied in rising stages with an increasing number of short-circuited electrolysis cells, preferably a 10% or 20% rise per stage, from the total number of cells.

The implementation of a stepwise adaption and control of the short-circuited switches is implemented in correlation and in proportion to the measured depths of the voltage drop of the grid supply voltage. It is also a rather practical approach to have increasing stages implemented in the control scheme that reasonably reflect and correspond to the depth of the voltage drop with an approximate linearity. According to the control scheme the activation or deactivation of selected electrolysis cells performed in stages implies the possibility to act on individual electrolysis cells or group of electrolysis cells via the switching status of a short-circuit switch.

It turned out to be very advantageous, for example, to have a 10% or 20% rise per stage, in view of the total number of electrolysis cells in the electrolysis plant. Hence, in an electrolysis plant or an electrolyser stack with 250 electrolysis cells a 10% stage resolution could affect a group of 25 cells respectively. In the electrolysis plant between full-load and zero-load nine stages are then implemented that can be selected and that short-circuit 25, 50, 75, 100, 125, 150, 175, 200, 225 electrolysis cells respectively depending on the selected short-circuit stage. With this scheme the power demand can be reduced and adapted to the LVRT-operational mode in rather fine and well-adapted 10% steps. A coarse stage resolution of about 20% per stage could already be sufficient for many industrial scale applications of electrolysis plants that are connected to an AC-grid. Different stage resolutions are possible depending on the application and grid requirements and specific standard set from grid operator for loads.

In a particular advantageous embodiment of the electrolysis plant the control unit is arranged for operation of respective short circuit switches such that in case that grid voltage returns after a voltage drop short-circuited electrolysis cells can be reconnected again, while power consumption is increased.

The reconnection of short-circuited electrolysis cells can be implemented in a control scheme of the control unit such that the power consumption increases again proportional to the available grid voltage, through deactivating or opening selectively short-circuit switches again according to the control scheme. For example, the operation of the electrolysis plant is continued and increased approximately proportional to the available grid voltage until the nominal grid voltage value has returned and stabilized. Then, normal electrolysis operation and production of products like hydrogen to nominal value is achieved again.

In an advantageous embodiment of the electrolysis plant the control unit is provided with a defined ramp-up sequence for a controlled increase of the electrolysis current such that electrolysis current can be ramped-up corresponding to said sequence after reconnection of the short-circuited electrolysis cells.

The implementation of a ramp-up sequence allows a smooth or buffered ramp-up of electrolysis current after reconnection of short-circuited cells, such that an instantaneous and steep rise of the electrolysis current is avoided for the cells. This avoids and reduces stress on the reconnected cells. The electrolysis DC current might therefore be reduced to match power intake before the reconnection and then applying a defined ramp-rate for the electrolysis DC current. This way, the gas-production must not be resumed instantaneously at possibly full load for the cells which had been switched off before. Sequences can be programmed in the control unit to ramp up in a predefined way, corresponding to network and process requirements.

In another advantageous embodiment of the electrolysis plant in the short-circuit arrangement the short circuit switches comprise a fast-acting mechanical switch, a semiconductor switch or a combination of both.

These types of electrical switches demonstrate very short circuit or response time for their activation or deactivation, so that within a few Milliseconds the switching status can be changed. Their application is particularly favourable in order to comply to the needs of safely operating a electrolysis plant through a Fault-Ride-Though (FRT) transition, while complying with the grid requirements.

Advantageously the electrolysis plant comprises a connection transformer with a secondary winding that is connected to the AC-voltage input of the rectifier and a primary winding for connection to a grid.

In operation the electrolysis plant is connected to the power grid via the connection transformer, so that when the electrolysis plant is in operation, the electrolyser is supplied with direct current via the rectifier to run the electrolysis process. As outlined before, with the help of the grid stabilization equipment the control unit can receive and process an "in-situ" input signal about the present grid conditions on the AC-side of the electrolysis plant. With the connection transformer it is also possible to sense any change or instability of the grid voltage of the AC secondary side at the secondary winding of said transformer. There is no need to measure or determine grid voltage directly at the point of connection or at the primary winding of the connection transformer. In any configuration this enables the control unit - in case of a temporary voltage drop - to provide as output a control signal to the short-circuit arrangement to control the status respective short-circuit switches and to change the status in case of a voltage drop.

In another advantageous embodiment of the electrolysis plant the rectifier is designed for enabling a bidirectional operational mode, in particular a multilevel-modular-converter (MMC) is provided, and the rectifier being connected to the public grid, so that voltage support can be achieved by providing reactive power to the grid.

The voltage source converter (VSC), particularly designed as a modular multilevel converter (MMC), is preferably designed for bidirectional operation and is connected to a central network connection point, so that voltage support through reactive power provision for the public power grid can be realized.

Advantageously, further network services for the grid, e.g. the public grid, are also possible, such as the assumption of network functions.

The voltage source converter (VSC) is also preferably designed as an IGBT-based converter architecture which is capable to fed electrical power from the supply line into the grid as required. Possible architectures include modular multilevel converter, active front ends, and so on. This is a special and advantageous form of bidirectional operation of the electrolyser plant.

This allows to implement in addition the advantageous possible option to store access power provided from the grid in a respective DC-based storage unit that is connected on the DC-side of the electrolysis plant. Hence a storage unit may comprise a battery or a capacity bank that is integrated in the electrolysis plant. The DC storage unit maybe connected via an additional DC-DC converter on the DC-side of the converter that is available. An MMC or other topology therefore optionally can transfer power that is stored in the storage unit from the DC side to the AC side or vice versa, which promotes particularly flexible operation of the electrolysis plant.

Preferably converters are connected that allow a 4-quadrant mode operation. The energy stored inside the capacitors of the converter is usable for grid stabilization services, like for ancillary services, e.g. for fast frequency response requirements. This is advantageous in operational situations where part of the electrolysers in the electrolysis plant are not in operation, like in part load operation or due to partial service shutdown, and the capacitor bank or battery system is not required to discharge electricity and supply the DC-current to an operating electrolyser or electrolyser modules. In case the converter system is used this way, the electrolysis process is preferably disconnected from the capacitor bank. This can be achieved by a mechanical switch or a semi-conductor-based device.

Another aspect of the invention relates to a method to operate an electrolysis plant that is connected to a grid, like preferably the public grid or an island or isolated electrical network.

In said method for operating an electrolysis plant the electrolysis plant is being connected to a grid , wherein AC-voltage from said grid is supplied to the rectifier via the AC-voltage input, and wherein during a temporary voltage drop of the grid voltage at the point of connection the electrolysis plant stays connected, while from the short circuit arrangement a controllable short-circuit switch is activated to short-circuit a number of the electrolysis cells, such that the voltage demand of the electrolysis plant is lowered and electrolysis current maintained in order to keep the non-short-circuited electrolysis cells in operation.

With this method for operating the electrolysis plant the power consumption of the electrolysis plant is maintained while being connected to the grid, for instance the public grid, in case of a temporary voltage drop at the point of connection or even a fault within the electrolysis plant. A continuous operation of the electrolysis is ensured while the Low-Voltage-Ride Through (LVRT) requirements of the grid operator in case of a temporary voltage drop can be fulfilled. The requirement to demonstrate a Fault Ride Through capability for a large electrolysis plant while staying connected to the grid and continuously operated is ensured. The advantageous of the electrolysis plant that were outlined above are correspondingly applicable for the method for operating the electrolysis plant that is connected to a grid and operated.

In a particular advantageous execution of the method, in case that a voltage drop of the grid voltage is detected a Low-Voltage-Ride-Through (LVRT) operational mode is being activated wherein a number of electrolysis cells is short-circuited, while operation of a number of electrolysis cells approximately proportional to the available gid voltage is being continued.

In another advantageous execution of the method the number of short-circuited electrolysis cells is being controlled and such electrolysis cells selected in rising stages with an increasing number of short-circuited electrolysis cells per stage, preferably in applying a rise of 10% - 20% per stage, from the total number of electrolysis cells.

With a staged activation of the short-circuit a well-adapted response to the depth and the duration of a voltage drop in the gris can be obtained, while the electrolysis plant stays connected and continues operation on a reduced but advantageously still high level as possible.

In a further advantageous execution of the method in case after a voltage drop the grid voltage returns short-circuited electrolysis cells are reconnected again, while active power consumption of the electrolysis plant from the grid is increased.

In an advantageous execution of the method a defined ramp-up sequence is being activated by a controlled increase of the electrolysis DC-current that is being applied such that electrolysis DC-current can be ramped-up corresponding to said sequence after reconnection of the short-circuited electrolysis cells.

This ramp-up phase is very helpful to secure the electrolysis cells from degradation and damages that would result from an instantaneous uncontrolled reconnection and activation to a high nominal operational voltage that would imply high DC current supply immediately. The ramp-up sequence for the DC current that is supplied after reconnection of the temporarily short-circuited cells can be implemented via control of the DC current output of the rectifier. It would also be possible to have a controllable potentiometer circuitry in place for this reconnection and ramp-up phase.

Advantageously in the method DC current is reduced to match power intake before the reconnection of short-circuited electrolysis cells and activation of the ramp-up sequence.

It appears appropriate and useful in a Fault-Ride-Through operational mode for a save and harmless operation to temporarily reduce the DC-current through the electrolysis cells initially after reconnection and not to switch to full-load immediately. Therefore, compared to the pre-fault conditions the DC-current is temporarily reduced and increased smoothly in a ramp-up sequence up to the pre-fault value for example.

The control can be setup in a way to provide even instantaneous power consumption from the grid by switching from the DC-DC converter to the rectifier within milliseconds or it can provide a defined ramp for both systems to enable a smooth transition, as required.

In this reconnection modus of the method advantageously a control signal for the ramp-up sequence is supplied from a control unit, wherein a predefined ramp-up sequence is being programmed that is corresponding to network requirements of the grid and/or process requirements of the electrolysis plant. Both grid requirement from the operator and save operation objectives of the electrolysis plant can be obtained with this implementation of the method. In the control unit the ramp-up sequence maybe stored or programmed in a memory chip.

Both grid requirement from the operator and save operation objectives of the electrolysis plant can be obtained with this implementation of the method. In the control unit the ramp-up sequence maybe stored or programmed in a memory chip.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

It is shown in:
- FIG 1: a schematic representation of grid code conditions applicable for a connected or connectable electrolysis plant;
- FIG 2: a schematic diagram showing operating areas of the electrolysis plant with regard to a power supply from the electric power network or public grid;
- FIG 3: a schematic illustration of an example of an electrolysis plant provided with Fault Ride Through capability;
- FIG 4: a schematic illustration of another example of an electrolysis plant provided with Fault Ride Through capability; and
- FIG 5: a flowchart illustrating a typical Low-Voltage-Ride Through (LVRT) sequence.

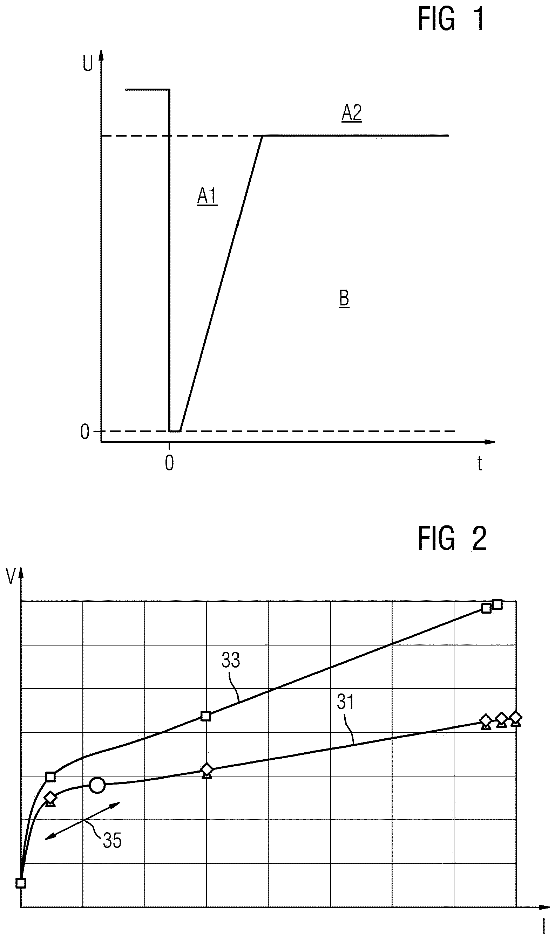

FIG 1 illustrates a schematic representation of typical grid code conditions that are applicable for a connected or connectable electrolysis plant.

The lines represent mandatory boundary conditions that must be complied with by the electrolysis plant, whereby a corresponding, specified switching state must be observed within or above the lines.

Connecting a large electrolysis plant to the public grid requires compliance with/the fulfillment of the local grid code requirements. Also islanded grid may feature similar requirements. Part of these requirements - especially for large plants - is a Fault Ride Through capability. The typical core requirement is to remain fully connected to the grid in case of a temporary voltage dip at the point of connection and to consume the full pre-fault power after a short period after the fault is cleared.)

The grid operator specifies a curve where the voltage drop is time dependently shown, during which the plant must remain connected (Area A1 + A2). Longer or deeper voltage dips allow a disconnection of the plant (Area B). A typical example is shown in FIG 1. Fulfilling this requirement is a huge challenge for the electrolysis plant and its converter system.

In the present example of an undervoltage event, a voltage U compared to the time t is shown in seconds. It has been shown that in the event of a temporary voltage dip, as shown in area A1, a switched-on state of the electrolysis plant should always be maintained. This means the electrolysis plant is required to stay fully connected. However, if this is a sharp voltage dip, for example in the direction of closely down to 0 V, as shown by the lowest dotted line, this switched-on and ready for operation state only needs to be maintained for a rather short time interval. In this example, the time limit of such an error state is about 0.2 seconds. In the case of a lower voltage dip, the time in which the switched state should be maintained increases linearly. Above a specified threshold value, as shown by the top dashed line for the A2 range, the switched state should generally be maintained regardless of the duration of the existing fault state, or the voltage deviation from the setpoint.

However, in case the duration of the fault condition exceeds area A1, as shown in area B, it is generally permitted for the electrolysis plant to be disconnected from the grid, at least for a short time, or in case that the operational mode of the electrolysis plant needs to be changed or stopped for some reasons. If the electrolysis plant meets these limiting conditions, it has grid compatibility and is accordingly "fault ride through" capable or "FRT-Ready".

In addition, grid operators may demand to withstand an unlimited number of consecutive faults, as long as the integrated power loss during all of these faults does not surpass a pre-defined threshold. Alternatively, the number of faults per time may be limited to a reasonable value, e.g. max. 10 faults within 15 min.

In FIG 2 a schematic diagram is provided which shows operating areas of an electrolysis plant with regard to a power supply from the electric power network or public grid. The electrolysis voltage U is depicted versus the electrolysis current I. A graph 31 shows a typical dependency at a begin of life (BoL) of an electrolysis plant, wherein a graph 33 shows the dependency at the end of life (EoL) of the electrolysis plant. The EoL graph 33 is located above the BoL graph 31 and shows a higher increase. Hence a substantially higher voltage is required for EoL operation of the electrolysis plant to result in the same electrolysis current compared to the BoL operation. A double arrow 35 indicates a range of a so called polarization operation, especially with regard to a grid event like a temporary steep voltage dip in the bending down area illustrated by the double arrow 35. The current I is highly sensitive against voltage changes particularly in and above said bending down area of the polarization curve. A voltage above a threshold is desired to ensure a stable mode of normal electrolysis operation in full load or part load. Furthermore, some minimum voltage needs to be provided to avoid fuel cell mode of the electrolysis cells and to secure the electrolysis cells against damage therefrom (Nernst voltage).

Important for the grid operator is a fast return to pre-fault conditions of the load after the fault is cleared. Should a large plant trip in case of short time disturbances within the grid (branch dropped into a power line and causes a short-circuit for a short time), the grid operator would struggle to balance the power in- and output after fault clearance. The power plants producing the power cannot be adjusted quick enough. Therefore, only a certain power is allowed to trip and it is essential for large consumers to remain connected in case of a voltage drop. A major challenge is to balance grid operation during the fault. Generation units must fulfill similar requirements as stated above and will continue to provide power, especially when the voltage dip is not too strong, for example in case of a grid fault several 100 km away which might result in a voltage drop down to 0.9 p.u.. At all times, the generation and consumption must be balanced to keep the grid frequency stable, which is also valid during the time of the fault.

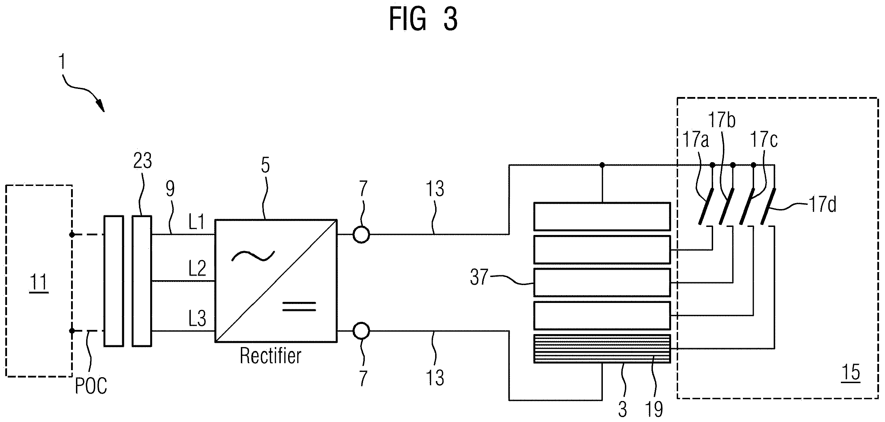

FIG 3 shows a schematic illustration of a basic example of an electrolysis plant 1 that is equipped with Fault Ride Through capabilities, particularly Low-Voltage-Ride-Through (LVRT) Capability. The electrolysis plant 1 comprises an electrolyser 3 with plurality of electrolysis cells 19 connected in series and a rectifier 5. It is possible that - as shown in FIG 3 - the electrolysis cells 19 are grouped in electrolysis modules 37 that each comprises a predetermined number of electrolysis cells 19 in series connection. The rectifier 5 has a three phase AC-input 9 with phases L1, L2, L3 for receiving alternating current and a DC-voltage output 7 for DC current supply. The electrolysis plant 1 is connected to the power grid 11 via a transformer 23, so that when the electrolysis system 1 is in operation, the electrolyser 3 is supplied with direct current via the rectifier 5 to run the electrolysis process. At the DC-side of the rectifier 5 a DC supply line 13 is connected to the DC-voltage output 7.

Further a short-circuit arrangement 15 installed, that is branching off the DC supply line 13 in parallel to the electrolysis cells 19. The short-circuit arrangement 15 comprises a plurality of controllable short-circuit switches 17a, 17b, 17c, 17d that are activatable respectively to short-circuit a selected number of the electrolysis cells 19 in order to lower the voltage demand while maintaining electrolysis current and keeping the non-short-circuited electrolysis cells 19 in operation.

It is important to mention that the short-circuit arrangement 15 including the short-circuit switches 17a, 17b, 17c, 17d is advantageously installed on the DC-side of the rectifier 5 in parallel to the electrolyser 3. Further the short-circuit arrangement 15 is enabled for receiving a control signal to activate selectively one or more short-circuit switches 17a, 17b, 17c, 17d. In normal operation and under stable grid voltage conditions the DC voltage provided at the DC supply line 13 corresponds to the operational voltage of the electrolyser 3 to operate all electrolysis cells 19 with full load to continuously produce largest amount of electrolysis product like hydrogen. The electrolysis plant comprises a connection transformer 23 with a secondary winding that is connected to the DC-voltage output 7 of the rectifier 5 and a primary winding for connection to a grid 11. The rectifier 5 is designed for enabling a bidirectional operational mode, particularly a Multilevel-Modular-Converter (MMC) is provided, and the rectifier 5 is connected to the grid 11, so that there is also an option to provide voltage support to the grid 11 that can be achieved by providing reactive power to the grid (11).

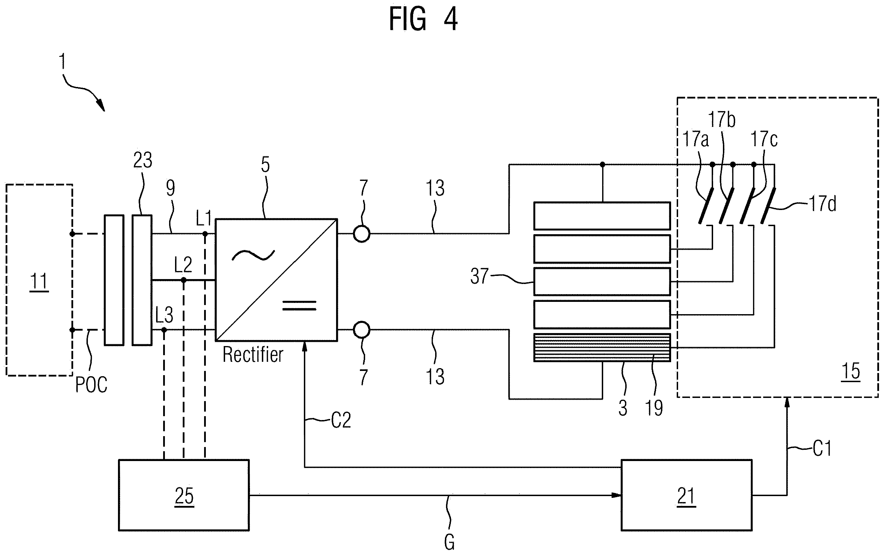

In FIG 4 another example similar to the example in FIG 3 of an electrolysis plant 1 is depicted, that shows further elements and details about implementation of an improved the Low-Voltage-Fault-Ride-Through (LVRT) Capability. This example is - compared to FIG 3 electrolysis plant 1 - equipped with an enhanced LVRT surveillance and control system. The electrolysis plant 1 shown in FIG 4 is enabled for Fault Ride Through capability during operation when being connected to the grid 11, the public grid 11 or an island grid 11 for instance. Here the electrolysis plant 1 comprises a control unit 21 with an interface to a grid stabilization equipment 25 that is designed to provide a grid voltage input-signal G to the control unit 21. The control unit 21 is enabled to provide a control signal C₁ to the short-circuit arrangement 15 for operating the short-circuit switches 17a, 17b, 17c, 17d as required. For this purpose, the control unit 21 is designed and a program is implemented in a memory such that each of the short circuit switches 17a, 17b, 17c, 17d in the short circuit arrangement 15 can be operated individually. The control unit has an interface to the grid stabilization equipment 25 that is connected to the control unit 21 via a data link. The grid stabilization equipment 25 is enabled for surveillance of the grid voltage at the point of connection (POC) to the grid 11. In FIG 4 a related voltage signal proportional to the voltage at POC is recorded at the secondary winding of the connection transformer 23.

The control unit 21 is programmed for operation of respective short circuit switches 17a, 17b, 17c, 17d such that in case of a voltage drop of the grid voltage a selected and predefined number of electrolysis cells 19 can be short-circuited, while power consumption proportional to the available grid voltage is continued and an electrolysis current maintained to operate the non-short-circuited electrolysis cells 19. Hence, the electrolysis plant can stay connected to the grid 11 in an undervoltage scenario and perform a Low-Voltage-Ride through operational mode, while a reduced hydrogen production is continued.

As shown in FIG 4 the control unit 21 is provided such that the selected number of short-circuited electrolysis cells 19 can be applied in rising stages with an increasing number of short-circuited electrolysis cells 19. In the shown example of FIG 4 a 20% rise per stage is implemented in the circuitry. Each of the modules 27 that comprises the same defined number of electrolysis cells 19 corresponds to a stage in the short-circuit arrangement 15. Thus, in the present example a module-wise activation of the short-circuit switches 17a, 17b, 17c, 17d is realized. The rise per stage can be determined flexibly so that also a finer 10% rise per stage can be implemented to better follow and adapt the number of short-circuited cells 19 approximately proportional to the depth temporary voltage drop. It is important to underline that control unit 21 is arranged also for smart operation in a phase where the grid voltage recovers again up to rated AC voltage of the grid 11. For this purpose, the control unit 21 is also enabled the for operation of respective short circuit switches 17a, 17b, 17c, 17d such that in case that grid voltage returns after a voltage drop short-circuited electrolysis cells 19 can be reconnected again, while power consumption of the electrolysis plant 1 is increased. This is realized in an improved control scheme with a defined and smooth ramp-up sequence that is implemented in the control unit 21. Hence, the control unit 21 is provided with a defined ramp-up sequence for a controlled increase of the electrolysis current such that electrolysis current can be ramped-up corresponding to said sequence after reconnection of the short-circuited electrolysis cells 19. This avoids instantaneous activation of cells 19 and charging with high AC current when being reconnected. To obtain this functionality the control unit 21 is enabled to provide a control signal C₂ to the rectifier 5 for controlling the rectifier 5 output DC-current output. It is therefore recommended to reconnect with a reduced DC-current at the beginning of the ramp-up sequence. During operation of the electrolysis plant 1 the grid voltage at the point of connection POC is continuously monitored indirectly at the secondary windings of the connection transformer 23, preferably for each of the three phases L1, L2, L3 of the connection transformer 23. Alternatively, it can also be connected to measure the primary side voltage of the transformer 23. In addition, the rectifier 5 is designed for enabling a bidirectional operational mode, in particular a multilevel-modular-converter (MMC) or another suitable topology may be used that is connected to the public grid 11. With a MMC or other 4-quadrant topology also voltage support can be achieved by providing reactive power for the public electricity grid 11, in grid situations that require such measures.

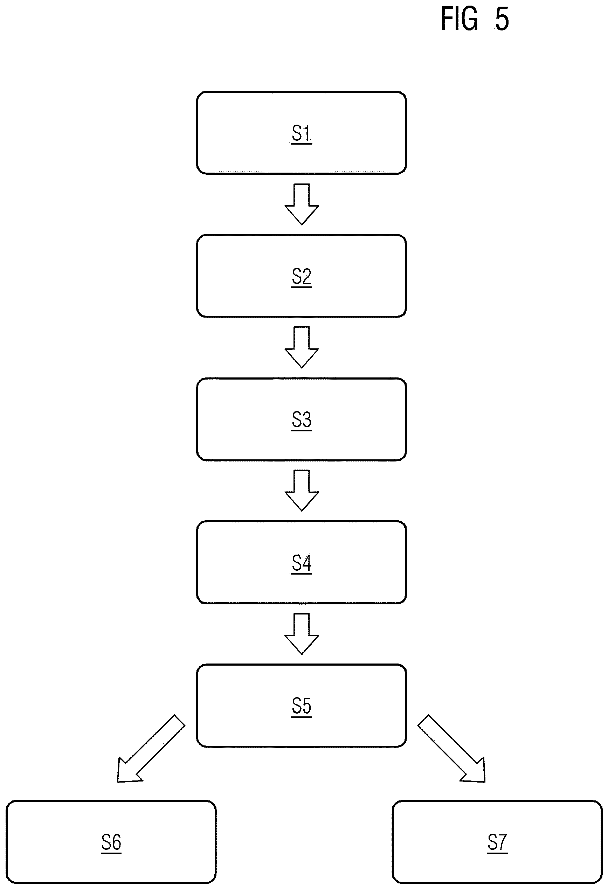

In FIG 5 a simplified flowchart is depicted that illustrates a typical Low-Voltage-Ride Through (LVRT) sequence when the electrolysis plant 1 is in operated. Particularly, when being connected to the public grid 11 the electrolyser plant 1 is capable for Fault-Ride Through operation and compliance with local grid code requirements. In general, the grid 11 may be implemented as a public grid 11 or an island or isolated grid 11 respectively. In normal operational mode of the electrolysis plant 1 the electrolysis plant 1 is connected to the grid 11 via the transformer 23, that provides three phases medium voltage output at nominal grid frequency of 50 or 60 Hz for example. The AC-Voltage initially received from the respective grid 11 and provided on the secondary side of the connection transformer 23 after transformation is supplied to the rectifier 5 via the AC-voltage input 9. A typical Low-Voltage-Ride-Through (LVRT) sequence of the electrolysis plant could look like this:
During normal operation the grid voltage is surveilled and recorded continuously. At step S1 a voltage drop is recorded that is about 0.8 p.u. from rated grid voltage due to a distant fault in the grid 11. This implies that in step S2 the electrolysis DC current immediately drops, as the supply voltage is not sufficient to drive the electrolysis anymore, see also polarization curve FIG 2. Accordingly, in step S3, the grid stabilization equipment 25 detects the drop in the grid voltage and provides a respective grid voltage signal G to the control unit 21 as input signal. The control unit 21 reacts instantaneously by providing a control signal C1 to the short-switching arrangement 15. A predefined number of electrolysis cells 19 are fast-short-circuited by activating one or more of the short-circuit switches 17a, 17b, 17c, 17d.

In step S4 due to the lowered voltage demand caused by the short-circuiting in S3, the remaining non-shorted electrolysis cells 19 can instantly resume hydrogen production. The electrolysis plant 1 is able to consume active power during the fault, proportional to the available system voltage. The distant fault is cleared in S5 and the supply voltage returns to its nominal value of about 100 p.u. In S6 the control unit 21 receives a respective grid voltage signal G from the grid stabilization equipment 25 that indicates the return of the supply voltage. The control unit 21 provides a control signal C1 to the short-circuit arrangement 15 that deactivates or opens respective short-circuit switches 17a, 17b, 17c, 17d on the short-circuited electrolysis cells 19. The whole electrolysis plant 1 returns to nominal production. As an alternative option to S6 operational mode procedure to reduce the stress on instantaneously reconnected cells 19, the DC current is reduced to match power intake before the reconnection and then applying a defined ramp-rate for the DC current. This way, the gas-production must not be resumed instantaneously at possibly full load for the cells 19 which had been switched off before. Sequences can be programmed to ramp up in a predefined way, corresponding to network and process requirements.

A fast short-circuit switch 17a, 17b, 17c, 17c could be either a fast-acting mechanical switch, a semiconductor switch or a combination of both. The number of cells shortened during an LVRT scenario can either be predefined, i.e. half of the cells, or can be adapted in multiple stages, i.e. 10% or 20% steps of the total number of cells, depending on the depths of the grid voltage drop. The latter approach can be adapted this way an implemented in the control scheme: In step S3 a defined sequence of short-circuit operations could be performed to adjust to the actual voltage drop, for example, by initially short-circuiting 10% of the cells, measuring the DC current or power intake, if it is insufficient, short circuit another 10% (20% in total), and so on. The adjustments in connected electrolysis cells 19 can directly be communicated and considered by the process unit of the electrolysis plant 1 to adjust valves for fluid control of educt and products respectively and (trip) signal levels, if necessary. The information can also be communicated directly to connected filter and compensation systems of the electrolysis plant 1 or other relevant systems connected to the electrolysis plant 1. This might for example be used to ensure in addition fulfillment of reactive power requirements from operator, like cos(phi) ≥ 0.95.

The technology which is applied for the electrochemical process in the electrolyser 3 may be based on a plurality of alkaline electrolysis cells 19 and/or electrolysis cells 19 having a proton exchange membrane, hereinafter referred to as PEM-cell, and /or an anion exchange membrane hereinafter referred to as AEM-cell, or solid oxide electrolysis cell. In the electrolysis plant 1 for the electrolyser 3 combinations of different types of electrolysers 3 and underlying electrolysis processes and cells are possible, e.g. hybrid electrolysis systems are included as well and that can be enabled now for performing a "FRT-Ready" operation accordingly.

## Claims

1. Electrolysis plant (1) comprising an electrolyser (3) with a plurality of electrolysis cells (19) arranged in series connection and a rectifier (5), the rectifier (5) comprising a DC-voltage output (7) that is connected to the electrolyser (3) via a DC supply line (13) and an AC-voltage input (9) that is designed for a connection to a grid (11) and for receiving power from said grid (11) to supply the electrolyser (3) with electrolysis current, wherein a short circuit arrangement (15) is branching off the DC supply line (13) in parallel to the electrolysis cells (19), wherein the short-circuit arrangement (15) comprises a plurality of controllable short-circuit switches (17a, 17b, 17c, 17d) that are activatable respectively to short-circuit a selected number of the electrolysis cells (19) in order to lower the voltage demand while maintaining electrolysis current and keeping the non-short-circuited electrolysis cells (19) in operation.

2. Electrolysis plant (1) according to claim 1, comprising a control unit (21), wherein the control unit (21) is designed to operate each of the short circuit switches (17a, 17b, 17c, 17d) in the short circuit arrangement (15).

3. Electrolysis plant (1) according to claim 2, comprising an interface to a grid stabilization equipment (25) that is connected to the control unit (21) and that is enabled for surveillance of the grid voltage at the point of connection (POC) to the grid (11).

4. Electrolysis plant (1) according to claim 3, wherein the control unit (21) is arranged for operation of respective short circuit switches (17a, 17b, 17c, 17d) such that in case of a voltage drop of the grid voltage a selected (predefined) number of electrolysis cells (19) can be short-circuited, while power consumption proportional to the available grid voltage is continued and an electrolysis current maintained to operate the non-short-circuited electrolysis cells (19).

5. Electrolysis plant (1) according to claim 4, wherein the control unit (21) is provided such that the selected number of short-circuited electrolysis cells (19) can be applied in rising stages with an increasing number of short-circuited electrolysis cells (19), preferably a 10% or 20% rise per stage, from the total number of cells (19).

6. Electrolysis plant (1) according to claim 4 or 5, wherein the control unit (21) is arranged for operation of respective short circuit switches (17a, 17b, 17c, 17d) such that in case that grid voltage returns after a voltage drop short-circuited electrolysis cells (19) can be reconnected again, while power consumption is increased.

7. Electrolysis plant (1) according to claim 6, wherein the control unit (21) is provided with a defined ramp-up sequence for a controlled increase of the electrolysis current such that electrolysis current can be ramped-up corresponding to said sequence after reconnection of the short-circuited electrolysis cells (19).

8. Electrolysis plant (1) according to one of the preceding claims, wherein in the short-circuit arrangement (15) the short circuit switches (17a, 17b, 17c, 17d) comprise a fast-acting mechanical switch, a semiconductor switch or a combination of both.

9. Electrolysis plant (1) according to one of the preceding claims, comprising a connection transformer (23) with a secondary winding that is connected to the AC-voltage input (9) of the rectifier (5) and a primary winding for connection to a grid (11).

10. Electrolysis plant (1) according to one of the preceding claims, wherein the rectifier (5) is designed for enabling a bidirectional operational mode, in particular a multilevel-modular-converter (MMC) is provided, and the rectifier (5) being connected to the public grid (11), so that voltage support can be achieved by providing reactive power to the grid (11) .

11. Method for operating an electrolysis plant (1) according to one of the preceding claims, wherein the electrolysis plant (1) is connected to a grid (11), wherein AC-voltage from said grid (11) is supplied to the rectifier (5) via the AC-voltage input (9), and wherein during a temporary voltage drop of the grid voltage at the point of connection the electrolysis plant (1) stays connected, while from the short circuit arrangement (15) a controllable short-circuit switch (17a, 17b, 17c, 17d) is activated to short-circuit a number of the electrolysis cells (19), such that the voltage demand of the electrolysis plant (1) is lowered and electrolysis current maintained in order to keep the non-short-circuited electrolysis cells (19) in operation.

12. Method according to claim 11, wherein in case that a voltage drop of the grid voltage is detected a Low-Voltage-Ride-Through (LVRT) operational mode is being activated wherein a number of electrolysis cells (19) is short-circuited, while operation of a number of electrolysis cells (19) approximately proportional to the available gid voltage is being continued.

13. Method according to claim 11 or 12, wherein the number of short-circuited electrolysis cells (19) is being controlled and such electrolysis cells (19) selected in rising stages with an increasing number of short-circuited electrolysis cells (19) per stage, preferably in applying a rise of 10% - 20% per stage, from the total number of electrolysis cells (19) .

14. Method according to claims 11, 12 or 13, wherein in case after a voltage drop the grid voltage returns short-circuited electrolysis cells (19) are reconnected again, while active power consumption of the electrolysis plant (1) from the grid (11) is increased.

15. Method according to claim 14, wherein a defined ramp-up sequence is being activated by a controlled increase of the electrolysis DC-current that is being applied such that electrolysis DC-current can be ramped-up corresponding to said sequence after reconnection of the short-circuited electrolysis cells (19).

16. Method according to claim 15, wherein DC current is reduced to match power intake before the reconnection of short-circuited electrolysis cells (19) and activation of the ramp-up sequence.

17. Method according to claim 16, wherein a control signal for the ramp-up sequence is supplied from a control unit (21), wherein a predefined ramp-up sequence is being programmed that is corresponding to network requirements of the grid (11) and/or process requirements of the electrolysis plant (1).
